# EUROPÄISCHE PATENTANMELDUNG

(11) **EP 1 629 920 A1**
(43) Veröffentlichungstag der Anmeldung: **01.03.2006**
(21) Anmeldenummer: 04020227.7
(22) Anmeldetag: 26.08.2004
(51) Int. Cl.: B23H 7/26, B23Q 16/08, B23Q 1/00

(54) **Spannvorrichtung für ein Werkzeug an einer Werkzeugmaschine, insbesondere einer Senkerodiermaschine**

(71) Anmelder: System 3R International AB, 162 50 Stockholm (SE)
(72) Erfinder: Dahlquist, Hakan, 16572 Hässelby (SE); Modin, Christer, 164 78 Kista (SE); Ottosson, Dirk, 163 50 Spanga (SE)
(74) Vertreter: Weiss, Wolfgang

(57) **Zusammenfassung**

Die Erfindung betrifft eine Spannvorrichtung für ein Werkzeug an einer Werkzeugmaschine mit einem ersten und einem zweiten Kupplungsteil, wobei das erste Kupplungsteil exzentrisch und winkelmässig zueinander versetzte Leisten mit Begrenzungsflächen zur genauen x-y Positionierung des zweiten Kupplungsteil 2, das zweite Kupplungsteil 2 Seitenflächen 11 mit elastische Lippen 5 zur Anlage an die Begrenzungsflächen aufweist, und eine Verbindungsvorrichtung zur genauen z-Positionierung des ersten und zweiten Kupplungsteils 2 vorgesehen ist. Das zweite Kupplungsteil 2 besteht aus einem Stück mit verschiedenen Festigkeiten, Dehnbarkeiten und Härten, wobei Bereiche 8 der Lippen 5 höhere Festigkeiten, Dehnbarkeiten und/oder Härten aufweisen als die andere Bereiche 9 der Lippen 5 und oder Bereiche des zweiten Kupplungsteils 2.

## Beschreibung

Die Erfindung betrifft eine Spannvorrichtung und ein Verfahren zur Herstellung für ein Werkzeug an einer Werkzeugmaschine mit einem ersten und einem zweiten Kupplungsteil, wobei das erste Kupplungsteil exzentrisch und winkelmässig zueinander versetzte Leisten mit Begrenzungsflächen zur genauen x-y Positionierung des zweiten Kupplungsteil, das zweite Kupplungsteil Seitenflächen mit elastische Lippen zur Anlage an die Begrenzungsflächen aufweist, und eine Verbindungsvorrichtung zur genauen z-Positionierung des ersten und zweiten Kupplungsteils vorgesehen ist.

Aus der europäischen Patentschrift EP 0 255 042 ist eine Spannvorrichtung für ein Werkzeug für eine Werkzeugmaschine, insbesondere eine Senkerodiermaschine bekannt. Die Spannvorrichtung umfasst ein Spannfutter, welches zwei aus der Unterseite des Spannfutters vorstehende Leisten aufweist, die mit Anlageflächen zur Ausrichtung des Werkzeugs in einer x-Richtung und einer y-Richtung, die quer zu einer Mittellinie des Spannfutters weisen, versehen sind. Um das Werkzeug beliebig oft wiederholbar und jeweils mit ausserordentlich hoher Genauigkeit in einer vorgegebenen Lage am Spannfutter positionieren zu können, ist vorgesehen, dass von der Unterseite des Spannfutters mehrere Pfosten vorstehen, welche an ihren freien Stirnflächen in der x-y Ebene sich erstreckende Referenzflächen aufweisen, wobei die Leisten exzentrisch und winkelmässig zueinander versetzt ausgebildet sind, und dass ein Werkzeughalter zur Anlage an die Pfosten eine plane Oberfläche aufweist, in welche zwei Paare von auf die Leisten ausgerichteten Nuten mit zur Anlage an die Leisten vorgesehenen elastischen Lippen geschnitten sind, wobei der Werkzeughalter eine Mittelbohrung mit Arretierelementen zur arretierenden und lösbaren Aufnahme eines Zugbolzens besitzt.

Es gibt Spannsysteme, bei denen sowohl das als Spannfutter dienende Kupplungsteil als auch das andere Kupplungsteil als Halter für Werkzeuge eingesetzt wird. Der Halter soll auch für Werkstücke dienen. Bisher wurden die beiden Kupplungsteile jeweils separat hergestellt, bearbeitet und gehärtet, wobei eine ebene Fläche mit Löchern zur Befestigung Werkstückhaltern vorgesehen ist, d. h. es sind mindestens zwei Teile erforderlich, um mit dem jeweiligen Kupplungsteil und einem Werkzeug eine kraftschlüssige Verbindung herzustellen. Dies erfordert zusätzliche Herstellungsverfahren des gesamten Spannsystems.

Die Aufgabe der Erfindung liegt in einer Verbesserung der Spannvorrichtung, um die Herstellung zu vereinfachen und kostengünstig zu gestalten ohne Zwischenschaltung von separaten Teilen die der Befestigung von Werkstücken bzw. Werkzeugen dienen.

Erfindungsgemäss wird diese Aufgabe dadurch gelöst, dass das zweite Kupplungsteil aus einem Stück mit verschiedenen Festigkeiten, Dehnbarkeiten und Härten besteht, wobei Bereiche der Lippen höhere Festigkeiten, Dehnbarkeiten und/oder Härten aufweisen als die andere Bereiche der Lippen und oder Bereiche des zweiten Kupplungsteils.

Weiterhin wird die Aufgabe erfindungsgemäss dadurch gelöst, dass das erste Kupplungsteil aus einem Stück mit verschiedenen Festigkeiten, Dehnbarkeiten und Härten besteht, wobei Bereiche der Leisten höhere Festigkeiten, Dehnbarkeiten und/oder Härten aufweisen als die andere Bereiche der Leisten und oder Bereiche des ersten Kupplungsteils.

Weiterhin dient ein Verfahren zur Herstellung einer erfindungsgemässen Spannvorrichtung zur Lösung der Aufgabe, wobei das erste und/oder zweite Kupplungsteil zunächst ungehärtet nach bekannten Methoden anwendungsbezogen hergestellt, bearbeitet, geformt und die Oberfläche gehärtet wird.

Die Lösung reduziert die Kosten der Benutzer und Hersteller der Spannvorrichtung in der Weise, dass die Werkzeug- oder die Werkstückhalterung in das eine bzw. das andere Kupplungsteil integriert wird und der Benutzer in der Lage ist die Werkzeug- oder die Werkstückhalterung selbst nach seinen Wünschen zu bearbeiten. Ein Kupplungsteil besitzt am unteren Bereich die Kupplungsseite. Am oberen Bereich ist ein frei bearbeitbarer Bereich für die Werkzeug-oder die Werkstückhalterung vorgesehen. Die Erfindung ist nicht auf die Bearbeitung durch den Benutzer beschränkt. Ebenso ist es möglich, dass die Bearbeitung durch den Hersteller oder seinen Service in einfacher Weise erfolgen kann.

Die Erfindung bezieht sich auf beide Kupplungsteile, entweder auf das Teil mit den Leisten oder auf das Teil mit den Lippen, je nach dem wie die Kupplungsteile jeweils eingesetzt werden als Spannfutter oder als Halter für das Werkzeug oder das Werkstück. Bei den herkömmlichen Spannfuttern war es erforderlich die jeweiligen Kupplungsteile zur Bearbeitung mehrmals ein- bzw. auszuspannen, z. B. zum Härten nach der Bearbeitung.

Die Bearbeitung der weichen Bereiche der Kupplungsteile ist geeignet für alle denkbaren Funktionen und Formen.

Wie oben beschrieben ist der Kern der Erfindung eins der beiden Kupplungsteile derart auszubilden, indem die Befestigungsvorrichtung für Werkzeug bzw. Werkstück einstückig in das jeweilige Kupplungsteil integriert wird. Das einzige Teil wird mit Bereichen verschiedener Materialeigenschaften, wie Festigkeit, Elastizität, Härte etc. hergestellt. Weichere Materialeigenschaften auf der Werkzeug ein freies Bearbeiten des Werkzeughalters, wie Formen, Fräsen, Stanzen, Drehen etc. Durch die Möglichkeit der freien Bearbeitung können die Kupplungsteile mit den Werkzeugbefestigungsvorrichtungen anwendungsbezogen hergestellt werden.

Vorzugsweise ist das zweite Kupplungsteil aus Stahl oder aus Edelstahl gefertigt ist und die Seitenflächen mit den Lippen sind oberflächengehärtet sind, wobei die Dicke d des gehärteten Bereiches kleiner als die Dicke D der Lippen 5 ist.

Die Oberflächenhärtung wird vorzugsweise je nach Anwendung bei unlegiertem Stahl eingesetzt. Die Dicke der gehärteten Schicht entspricht dann der Dicke d.

Weiterhin kann das zweite Kupplungsteil aus Stahl oder aus Edelstahl als Gussteil gefertigt sein, wobei ebenfalls die Seitenflächen mit den Lippen oberflächengehärtet sind und die Dicke d des gehärteten Bereiches kleiner als die Dicke D der Lippen ist.

In bevorzugter Ausführungsform ist das zweite Kupplungsteil aus Stahl oder aus Edelstahl gefertigt und die Seitenflächen mit den Lippen sind gehärtet und die Dicke d des gehärteten Bereiches ist je nach Anwendung einstellbar.

Beispielsweise wird das zweite Kupplungsteil mit den Lippen gegossen. Anschliessend erfolgt eine induktive Härtung, welche die Dicke der gehärteten Schicht ergibt.

In bevorzugter Ausgestaltung der Erfindung sind die an den Leisten angrenzenden Enden der Lippen in der Weise geformt, dass bei der Verspannung des ersten Kupplungsteils mit dem zweiten Kupplungsteil eine Kanten-, eine vollständige oder eine teilweise Flächenberührung erfolgt.

Vorzugsweise sind die Lippen in x-, y- und/oder z-Richtung unterschiedlich geformt sind.

Das erste Kupplungsteil ist bevorzugt aus Stahl oder aus Edelstahl gefertigt ist und die Ober - und/oder Begrenzungsflächen oberflächengehärtet sind.

In vorteilhafter Weise kann das erste Kupplungsteil aus Stahl oder aus Edelstahl als Gussteil gefertigt sein, wobei die Ober- und/oder Begrenzungsflächen oberflächengehärtet sind.

Ebenso kann das erste Kupplungsteil aus Stahl oder aus Edelstahl gefertigt sein, wobei die Ober- und/oder Begrenzungsflächen oberflächengehärtet sind und die Dicke des gehärteten Bereiches je nach Anwendung einstellbar ist.

Vorzugsweise weist die Spannvorrichtung eine Verbindungsvorrichtung zum kraftschlüssigen Verbinden des ersten mit dem mit dem zweiten Kupplungsteil auf.

Verschiedene Ausführungsformen der Spannvorrichtung sind in den Unteransprüchen sowie in den Figuren beschrieben bzw. gezeigt.

Das erste und/oder das zweite Kupplungsteil kann nach den folgenden Verfahren hergestellt werden:
- das erste und/oder zweite Kupplungsteil wird zunächst ungehärtet bearbeitet und anschliessend gehärtet;
- das erste und/oder zweite Kupplungsteil wird zunächst gehärtet und anschliessend bearbeitet;
- das erste und/oder zweite Kupplungsteil wird zunächst als Gussteil hergestellt, die Oberfläche gehärtet und anschliessend bearbeitet;
- das erste und/oder zweite Kupplungsteil wird zunächst als Gussteil hergestellt, bearbeitet und anschließend die Oberfläche gehärtet.

Die Erfindung wird im folgenden in den beigefügten Zeichnungen dargestellt. Es zeigen:
- Fig. 1: die beiden Kupplungsteile in Drauf - und Seitenansicht
- Fig. 2: die verspannte Spannvorrichtung in Seitenansicht
- Fig. 3: den Berührungsbereich der Lippe und der Leiste vergrössert (Bereich A)
- Fig. 4 a bis Fig. 4 d: verschiedene Ausführungsformen der Lippen
- Fig. 5a bis Fig. 5g: verschiedene Profile der Lippen
- Fig. 6a und Fig. 6b: Lippen mit verschiedenen Materialeigenschaften
- Fig. 7a und Fig. 7b: Seitenflächen mit verschiedenen Materialeigenschaften
- Fig. 8 bis Fig. 17: verschiedene Anwendungen und Ausführungsformen von Kupplungsteilen

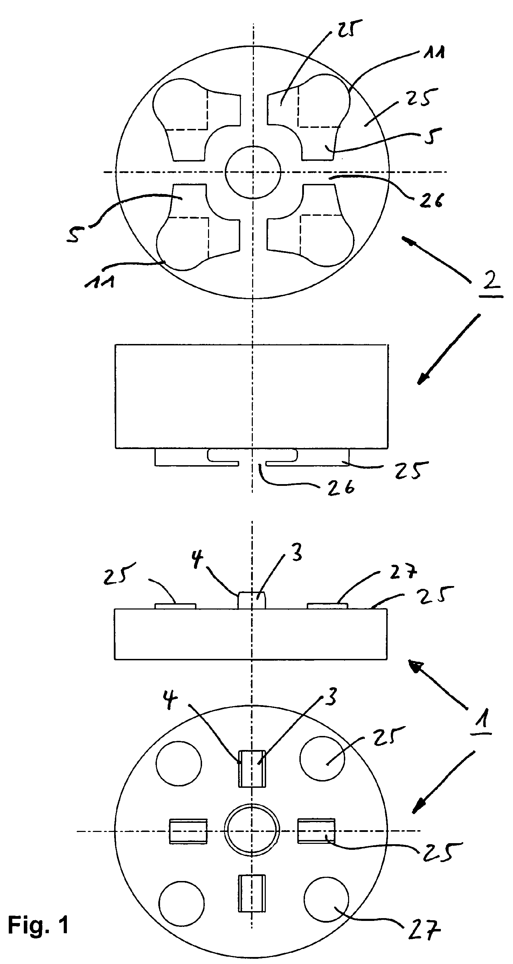

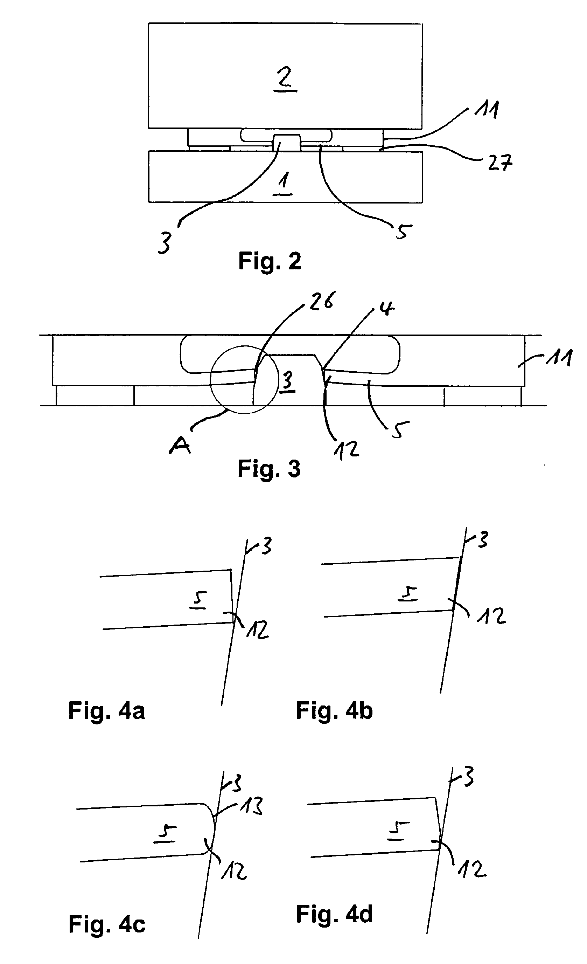

Figur 1 zeigt die beiden an sich bekannten Kupplungsteile 1, 2 in Drauf- und Seitenansicht . Der obere Teil der Figur 1 zeigt das zweite Kupplungsteil 2 mit den Seitenflächen 11 und den Lippen 5. Im unteren Bereich der Figur 1 ist das erste Kupplungsteil 1 mit den Leisten 3 und ihren Begrenzungsflächen 4 dargestellt. Im verspannten Zustand liegen die Leisten 3 in den von den Lippen 5 gebildeten Zwischenräumen 26, wie es in Figur 2 und vergrössert in Figur 3 dargestellt ist. Die Erfindung ist nicht beschränkt auf eine spezielle Kupplungsart.

Die beiden Kupplungsteile können in an sich bekannter Weise erfolgen, wie z.B. durch einfache, zentrale Verschraubung, durch einen mittels pneumatischer oder hydraulischer Zugspannvorrichtung bedienbaren Zugbolzen, Bajonettverschluss, mittels in radialer Richtung vorgesehenen Kugeln, die in dafür vorgesehene Nuten eingreifen, oder andere anwendbare Methoden.

Erfindungswesentlich ist es, dass die Kupplungsteile 1 und 2 mit den Seitenflächen 11, den Lippen, den Leisten 3, den z- Auflagen 27 oder andren in den folgenden Figuren beschriebenen anwendungsbezogenen Ausbildungen 5 zunächst aus weichem Material einstückig hergestellt und bearbeitete werden. Eine Härtung kann anschliessend erfolgen, wobei die Tiefe des gehärteten Bereiches 25 bezogen auf die Anwendung frei wählbar ist. Dies ist beispielsweise bei einer automatischen Produktion anwendbar, in der die Möglichkeit einer induktiven Härtung besteht.

Die Erfindung ist auch anwendbar auf eine Kupplungsart, bei der die z-Referenzen auf den Seitenflächen positioniert sind oder wobei die z-Referenzen und die x-y-Referenzen in einer Ebene liegen.

Die Figuren 4a bis 4d stellen verschiedene Ausführungsformen des vergrösserten Bereiches A der Figur 3 dar. Man sieht in Figur 3 die Verformung der Lippen 5. In Figur 4a ist das Lippenende 12 der Lippe 5 so gestaltet, dass beim Verspannen eine Kantenberührung entsteht, im Gegensatz zu Figur 4 b, wonach eine Flächenberührung dargestellt ist. Das Ende 12 der Lippe 5 in Figur 4 c weist eine Krümmung 13 auf und das Ende 12 der Lippe 5 in Figur 4d ist so ausgebildet, dass nur ein Teilbereich des Lippenendes die Leiste berührt.

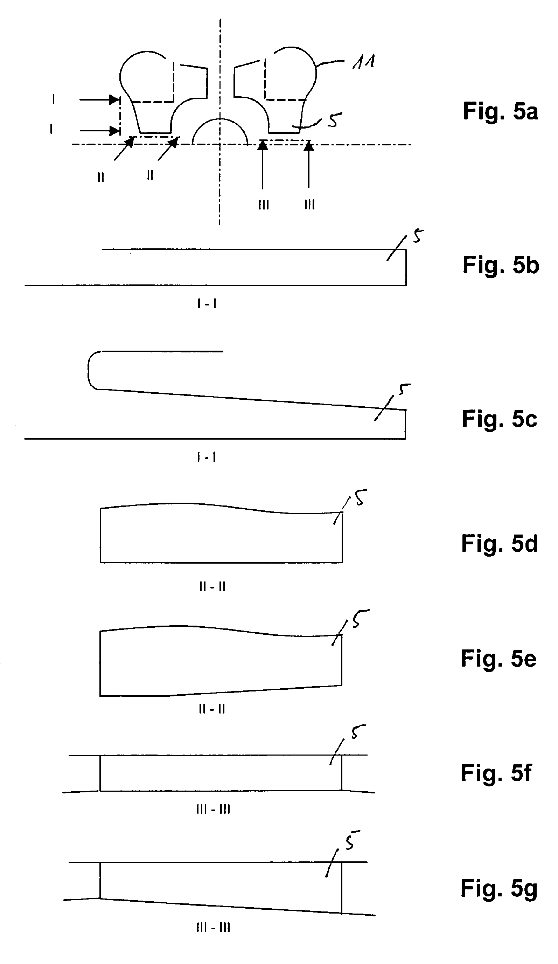

In Figur 5a bis 5g sind verschiedene Lippenprofile dargestellt. Die Figur 5b zeigt das bekannte Lippenprofil entlang der Linie I-I von Figur 5a mit konstanter Dicke, Figur 5c mit variabler Dicke in Längsrichtung gesehen. Die Figuren 5d und 5e zeigen das Lippenprofil in Richtung II-II von Figur 5a. Diese gekrümmten Profile ergeben eine bessere Steifigkeit der Kupplung. Eine Kombination der Profile zeigen die Figuren 5f und 5g entlang der Ansicht III-III von Figur 5a.

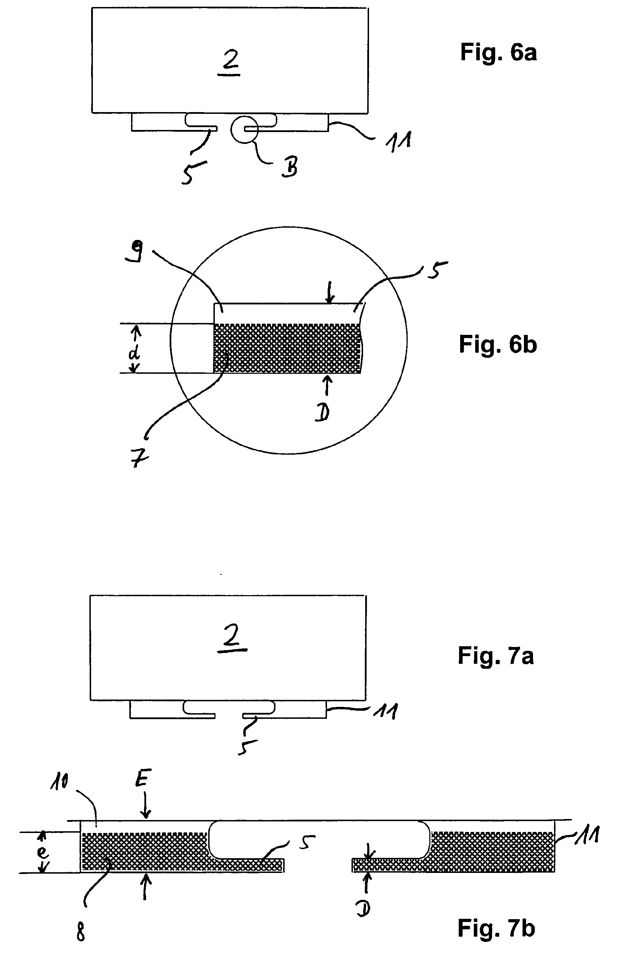

Die Figur 6a und 6b zeigt das zweite Kupplungsteil 2 mit der Seitenfläche 11 und der Lippe 5. In der Einzelheit B ist in Figur 6b die Lippe 5 mit verschiedenen Materialeigenschaften dargestellt. Der schraffierte Bereich 7 der Lippe 5 ist gehärtet, wobei die Dicke d des gehärteten Bereiches kleiner ist als die Dicke D der Lippe 5, eine Vorraussetzung für die Möglichkeit der Formung der Lippen durch bekannte Bearbeitungsmethoden. Der Teilbereich 9 der Lippe 5 bleibt ungehärtet und somit weich.

Die in der Figur 7a und 7b gezeigte Ausführungsform zeigt eine Seitenfläche 11 mit der Lippe 5. Hier ist die Dicke e des gehärteten Bereichs 8 (schraffierte Fläche) kleiner als die Dicke der Seitenfläche 11 aber grösser als die Dicke D der Lippe 5. Der Teilbereich 10 der Seitenfläche 11 bleibt ungehärtet und somit weich.

Diese Ausführungsform findet zum Beispiel Anwendung bei gegossenen Kupplungsteilen.

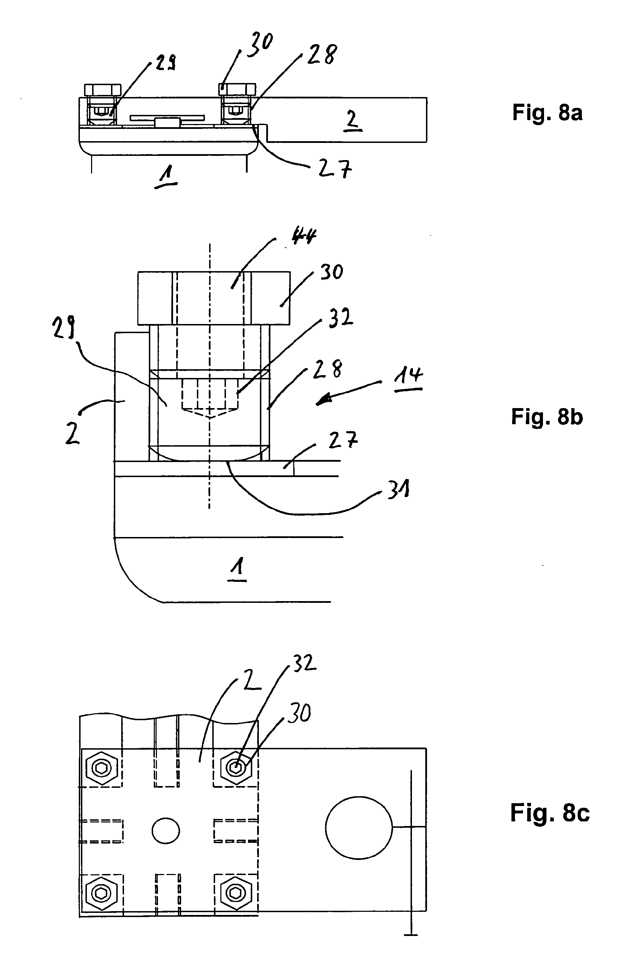

Eine Anwendung einer bevorzugten Ausführungsform für Drahterosionsmaschinen ist in Figur 8a bis Fig. 8c in Seitenansicht, vergrössert und in Draufsicht zu sehen. Das Kupplungsteil 2 weist in der z-Auflage 27 mit Gewinde versehene Bohrungen 28 auf. Das Kupplungsteil 1 wird mit dem Kupplungsteil 2 in beschriebener Weise verspannt. Die Bohrungen 28 nehmen Justierschrauben 29 zum Einstellen der z-Richtung auf. Mittels der Gegenschrauben 30 wird das einjustierte Niveau arretiert. Die Justierschraube 29 können am unteren Ende einen flachen Bereich 31 aufweisen. Die Justierschraube 29 hat eine Innensechskantverbindung 32. Die Feststellschraube 30 weist eine durchgehende Öffnung 44 für die mit einem entsprechenden Werkzeug zu bedienende Justierschraube 29 auf. Die Feststellschraube 30 wird gegen die Justierschraube 29 mittels eines Sechskantschlüssels arretiert.

Im Kupplungsteil 2 können alle z-Auflagen mit einer solchen Justiervorrichtung 14 versehen sein.

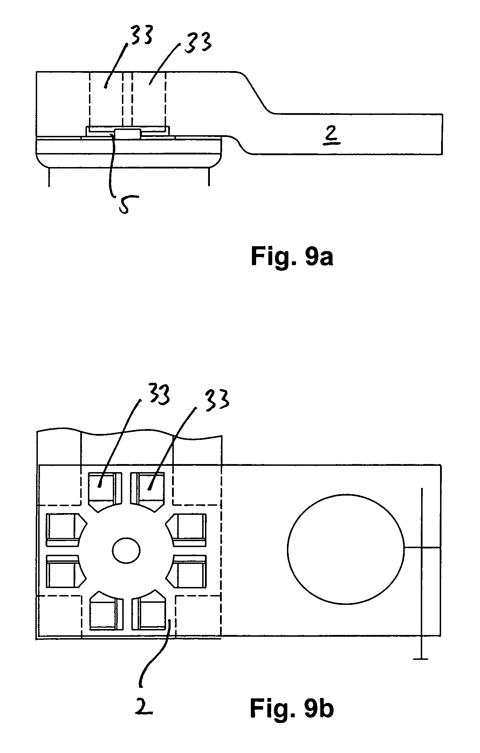

Die Figur 9a und 9b zeigt eine gegossene Version des Kupplungsteils 2 in Seiten- und Draufsicht. Das Kupplungsteil 2 ist in S-Form ausgebildet. Das Kupplungsteil 2 hat gegossene Öffnungen 33 oberhalb der Lippen 5. Diese Öffnungen 33 sind speziell für die Genauigkeit des gegossenen Kupplungsteils 2 von Vorteil.

Von Vorteil ist weiterhin, dass die Lippen 5 durch die Öffnungen 33 bearbeitet werden können, weil die Lippen 5 erfindungsgemäss eine bearbeitbare weiche Oberfläche in Richtung der Öffnungen 33 aufweisen.

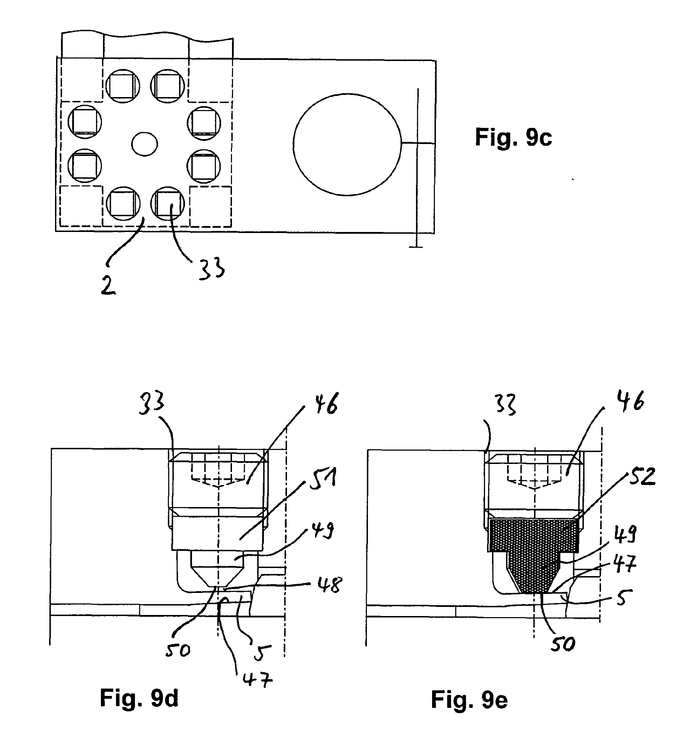

Die Öffnungen 33 sind in Figur 9b quadratisch gezeigt. Sie können ebenso zylindrisch sein und wegen der Oberflächenweichheit gegebenenfalls mit Gewinde versehen werden, wie es in den Figuren 9c, 9d und 9e dargestellt ist.

In Figur 9d ist eine Justiervorrichtung 46 gezeigt. Die Justiervorrichtung 46 kann in allen Öffnungen 33 des Kupplungsteils 2 vorgesehen sein. Mit der Justiervorrichtung 46 wird ein mechanischer Anschlag erzeugt, der die Lippen 5, insbesondere bei hohen Belastungen wiederholbar in die ursprüngliche Lage versetzt. Somit wird die Verbindung der beiden Kupplungsteile 1 und 2 sehr steif. Eine permanente Verbiegung der Lippen 5 wird mit dieser Justiervorrichtung 46 vermieden. Sie dient zur Einstellung eines Spaltes 48 zwischen der Lippenoberfläche 47 und dem unteren Ende 50 des von der Justierschraube 49 beaufschlagten Zapfens 51, dessen unteres Ende 50 einen Anschlag für die Lippenoberfläche 47 bildet.

Die Ausführungsform in Figur 9e löst das Problem eventuell verursachter Schwingungen der Lippen 5, beispielsweise beim Fräsen. Um diese Ungenauigkeiten verursachenden Schwingen zu unterdrücken, ist ein Zapfen 52 aus Dämpfungsmaterial, beispielsweise Gummi oder Kunststoff vorgesehen.

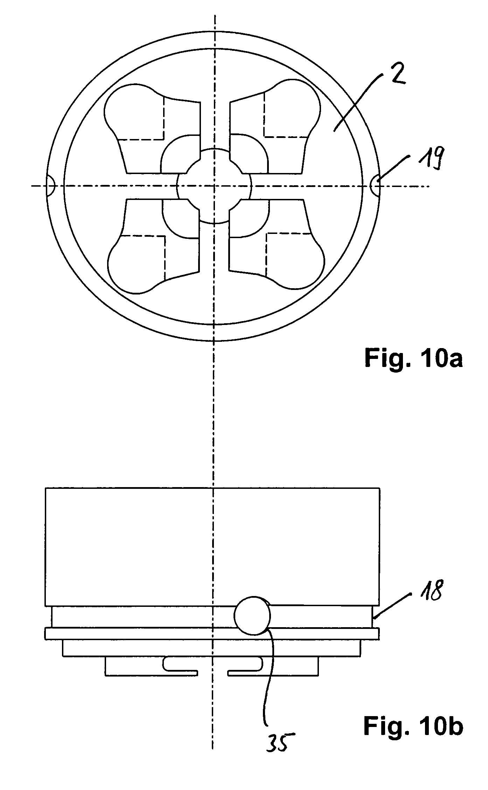

In Figur 10a und 10b ist ein Kupplungsteil 2 in Drauf- und Seitenansicht dargestellt. Dieses Kupplungsteil 2 ist für automatischen Einsatz im Zusammenhang mit Robotern anwendbar. Das Kupplungsteil 2 hat eine Nut 18, in die ein Greifer eines Roboters eingreifen kann. Die Nut 18 weist mindestens zwei Kerben 19 auf, um beim Greifen Verdrehungen zu vermeiden.

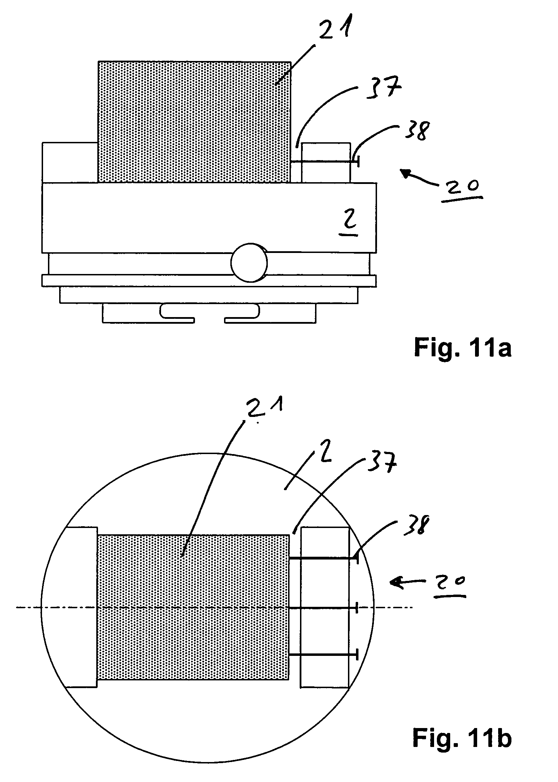

Die Figur 11 a und 11 b zeigt eine Kupplungsteil 2 mit einer Vorrichtung 20 zum Befestigen von Werkstücken 21 oder Werkzeugen. Die Vorrichtung weist einen Zwischenraum 37 zum Einspannen der Werkstücke 21 auf. Die Werkstücke 21 werden mittels Schrauben 38 in dargestellter Weise eingespannt.

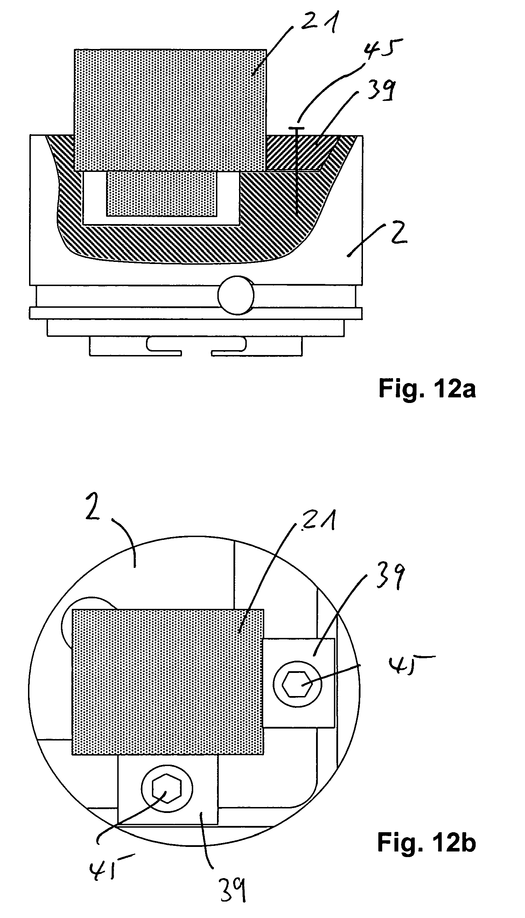

In Figur 12a und 12b zeigt eine andere Ausführungsform einer Werkstückhalterung mit Klemmbacken 39. Die Klemmbacken 39 sind entsprechend entsprechen dem einzuspannenenden Werkstück angepasst und angeordnet. Die Einspannung des Werkstückes 21 kann beispielsweise über Schrauben 45, die die Klemmbacken 39 mit dem Kupplungsteil 2 verbinden, erfolgen.

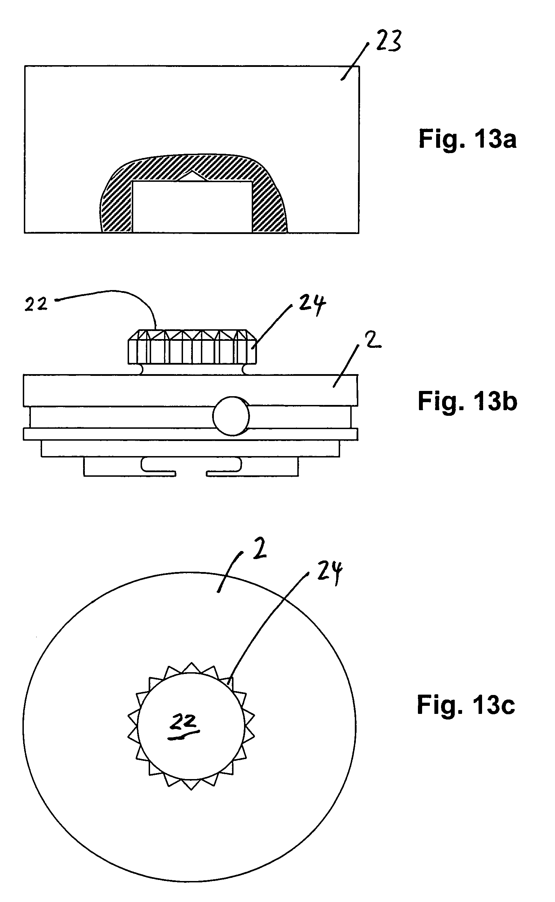

Die Figuren 13a, 13b und 13c zeigen ein Kupplungsteil 2 mit einem Schaft 22 zur Aufnahme einer Elektrode 23, beispielsweise aus Kupfer. Der Schaft 22 ist erfindungsgemäss einstückig mit dem Kupplungsteil 2 verbunden. Zur festen Verankerung und zur Erreichung eines besseren elektrischen Kontaktes der Elektrode besitzt der Schaft 22 umfangsmässig Keile, die mit der Elektrode 23 eine Keilverzahnung 24 bilden.

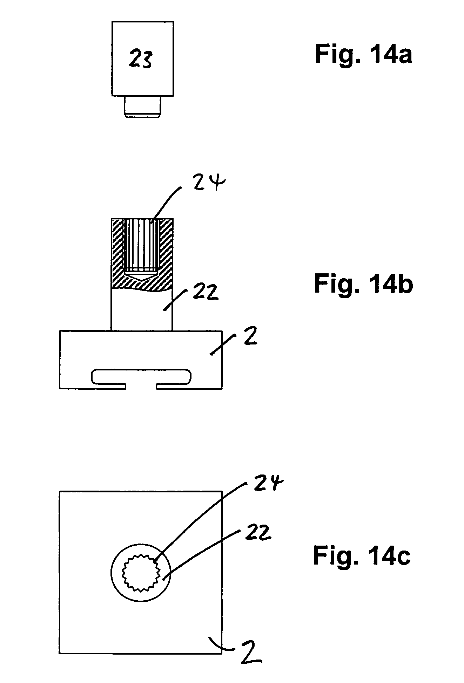

Die Figur 14a, 14b und 14c zeigt entsprechend Figur 13a, 13b und 13 c eine Keilverzahnung 24 mit der Elektrode 23, wobei die Keilverzahnung 24 innerhalb des Schaftes 22 angeordnet ist.

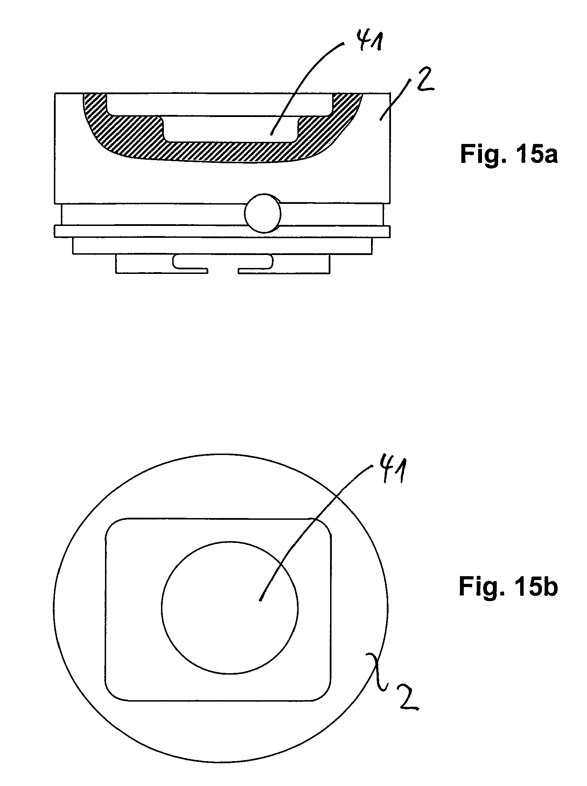

Die Figur 15a und 15 b zeigt ein Kupplungsteil 2 mit einem formbaren Hohlraum 41. Der Hohlraum besteht aus weichem Material und ist somit zur anwendungsbezogenen Bearbeitung geeignet, z. B. für Wachsmodelle, Präzisionsformung. Erfindungsgemäss kann die Oberfläche anwendungsbezogen gehärtet werden. Dies ist ein typisches erfindungsgemässes Beispiel zur direkten Bearbeitung eines Werkstückes, ein wiederholtes Aus- oder Umspannen des Werkstückes ist nicht erforderlich.

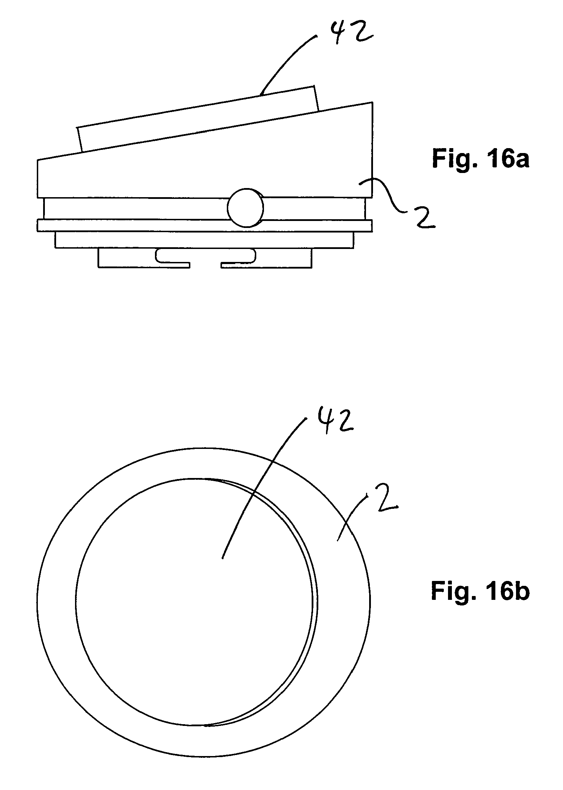

Das Kupplungsteil in Figur 16a und 16b zeigt eine andere Funktion und Form des oberen weichen Bereiches. Die Oberfläche des oberen Bereiches ist so bearbeitet, dass beispielsweise eine präzise, winkelgenaue Auflage eines Spiegels 42 für optische Messungen erzielt wird.

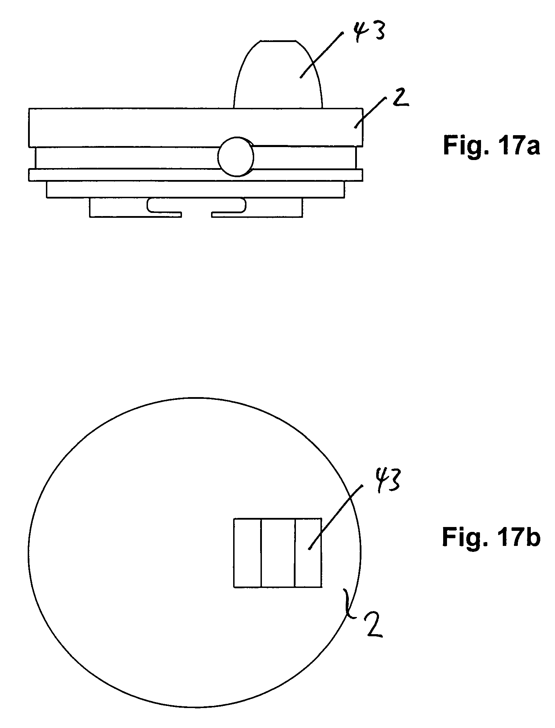

Die Ausführungsform des Kupplungsteils 2 in Figur 17a und 17b besteht in der Anordnung eines Musterstückes 43, welches zur Vorlage und Abtastung von herzustellenden Kopien dient. Erfindungsgemäss wurde das Musterstück auf dem eingespannten Kupplungsteil 2 bearbeitet und gehärtet ohne dass ein Aus-oder Umspannen des Kupplungsteiles 2 erforderlich ist.

Alle die in den Figuren 8 bis 17 beschriebenen Ausführungsformen sind erfindungsgemäss in wirtschaftlicher Weise herstellbar. Durch die erfindungsgemässen unterschiedlichen Materialeigenschaften einzelner Bereiche der Kupplungsteile 1 und 2 können diese oder die darin eingespannten Werkstücke oder Werkzeuge ohne bisher notwendiges Aus- oder Umspannen bearbeitet werden.

### Bezugszeichenliste

- 1: erstes Kupplungsteil
- 2: zweites Kupplungsteil
- 3: Leisten
- 4: Begrenzungsflächen
- 5: Lippen
- 7: Bereich
- 8: Bereich
- 9: Bereich
- 10: Bereich
- 11: Seitenflächen
- 12: Enden
- 13: Krümmung
- 14: Justiervorrichtung
- 18: Nut
- 19: Kerbe
- 20: Vorrichtung
- 21: Werkstück
- 22: Schaft
- 23: Kupferelektrode
- 24: Keilverzahnung
- 25: Bereich
- 26: Zwischenräume
- 27: Z- Auflage
- 28: Bohrung
- 29: Justierschraube
- 30: Feststellschraube
- 31: Flacher Bereich
- 32: Innensechskantverbindung
- 33: Öffnung
- 36: Werkstück
- 37: Zwischenraum
- 38: Schrauben
- 39: Klemmbacken
- 41: Hohlraum
- 42: Spiegel
- 43: Musterstück
- 44: Öffnung
- 45: Schrauben
- 46: Justiervorrichtung
- 47: Lippenoberfläche
- 48: Spalt
- 49: Justierschraube
- 50: Unteres Ende
- 51: Zapfen
- 52: Zapfen

## Patentansprüche

1. Spannvorrichtung für ein Werkzeug an einer Werkzeugmaschine mit einem ersten (1) und einem zweiten Kupplungsteil (2), wobei das erste Kupplungsteil (1) exzentrisch und winkelmässig zueinander versetzte Leisten (3) mit Begrenzungsflächen (4) zur genauen x-y Positionierung des zweiten Kupplungsteil (2), das zweite Kupplungsteil (2) Seitenflächen (11) mit elastische Lippen (5) zur Anlage an die Begrenzungsflächen (4) aufweist, und eine Verbindungsvorrichtung zur genauen z-Positionierung des ersten (1) und zweiten Kupplungsteils (2) vorgesehen ist, **dadurch gekennzeichnet, dass** das zweite Kupplungsteil (2) aus einem Stück mit verschiedenen Festigkeiten, Dehnbarkeiten und Härten besteht, wobei Bereiche (7, 8) der Lippen (5) höhere Festigkeiten, Dehnbarkeiten und/oder Härten aufweisen als die andere Bereiche (9) der Lippen (5) und/oder Bereiche (10) des zweiten Kupplungsteils (2).

2. Spannvorrichtung nach Anspruch 1, **dadurch gekennzeichnet, dass** das zweite Kupplungsteil (2) aus Stahl oder aus Edelstahl gefertigt ist und die Seitenflächen (11) mit den Lippen (5) oberflächengehärtet sind und die Dicke d des gehärteten Bereiches (7) kleiner als die Dicke D der Lippen 5 ist.

3. Spannvorrichtung nach Anspruch 1, **dadurch gekennzeichnet, dass** das zweite Kupplungsteil (2) aus Stahl oder aus Edelstahl als Gussteil gefertigt ist und die Seitenflächen (11) mit den Lippen (5) oberflächengehärtet sind und die Dicke d des gehärteten Bereiches (7) kleiner als die Dicke D der Lippen (5) ist.

4. Spannvorrichtung nach Anspruch 1, 2 und/oder 3, **dadurch gekennzeichnet, dass** das zweite Kupplungsteil (2) aus Stahl oder aus Edelstahl gefertigt ist und die Seitenflächen (11) mit den Lippen (5) gehärtet sind und die Dicke d des gehärteten Bereiches je nach Anwendung einstellbar ist.

5. Spannvorrichtung nach mindestens einem der vorherigen Ansprüche, **dadurch gekennzeichnet, dass** die an die Leisten (3) angrenzenden Enden (12) der Lippen (5) in der Weise geformt sind, dass bei der Verspannung des ersten Kupplungsteils (1) mit dem zweiten Kupplungsteil (2) eine Kanten-, eine vollständige oder eine teilweise Flächenberührung erfolgt.

6. Spannvorrichtung nach mindestens einem der vorherigen Ansprüche, **dadurch gekennzeichnet, dass** die an die Leisten (3) angrenzenden Enden (12) der Lippen (5) eine Krümmung (13) aufweisen.

7. Spannvorrichtung nach mindestens einem der vorherigen Ansprüche, **dadurch gekennzeichnet, dass** die Lippen (5) in x-y- und/oder z-Richtung unterschiedlich geformt sind.

8. Spannvorrichtung nach mindestens einem der vorherigen Ansprüche, **dadurch gekennzeichnet, dass** das zweite Kupplungsteil (2) mittels einer integrierten Justiervorrichtung (14) justierbar ist.

9. Spannvorrichtung nach mindestens einem der vorherigen Ansprüche, **dadurch gekennzeichnet, dass** im zweiten Kupplungsteil (2) über den Lippen (5) Öffnungen (33) angeordnet sind.

10. Spannvorrichtung nach Anspruch 9, **dadurch gekennzeichnet, dass** die Öffnungen (33) zylindrisch mit Gewinde ausgebildet sind, wobei in mindestens einer Öffnung (33) jeweils eine Justiervorrichtung (46) angeordnet ist zur Einstellung des Abstandes zwischen der Lippenoberfäche (47) und dem unteren Ende (48) der Justiervorrichtung (46).

11. Spannvorrichtung nach Anspruch 9 oder 10, **dadurch gekennzeichnet, dass** die Justiervorrichtung (46) aus einer Justierschraube (46) und einem Zapfen (51, 52) besteht.

12. Spannvorrichtung nach Anspruch 9, 10, oder 11, **dadurch gekennzeichnet, dass** der Zapfen (52) aus einem schwingungsverhindernden Material besteht.

13. Spannvorrichtung für ein Werkzeug an einer Werkzeugmaschine mit einem ersten (1) und einem zweiten Kupplungsteil (2), wobei das erste Kupplungsteil (1) exzentrisch und winkelmässig zueinander versetzte Leisten (3) mit Begrenzungsflächen (4) zur genauen x-y-Positionierung des zweiten Kupplungsteil (2), das zweite Kupplungsteil (2) Seitenflächen (11) mit elastische Lippen (5) zur Anlage an die Begrenzungsflächen (4) aufweist, und eine Verbindungsvorrichtung zur genauen z-Positionierung des ersten (1) und zweiten Kupplungsteils (2) vorgesehen ist, **dadurch gekennzeichnet, dass** das erste Kupplungsteil (1) aus einem Stück mit verschiedenen Festigkeiten, Dehnbarkeiten und Härten besteht, wobei Bereiche der Leisten (3) höhere Festigkeiten, Dehnbarkeiten und/oder Härten aufweisen als die andere Bereiche der Leisten (3) und/oder Bereiche des ersten Kupplungsteils (1).

14. Spannvorrichtung nach Anspruch 11, **dadurch gekennzeichnet, dass** das erste Kupplungsteil (1) aus Stahl oder aus Edelstahl gefertigt ist und die Ober- und/oder Begrenzungsflächen (4) oberflächengehärtet sind.

15. Spannvorrichtung nach Anspruch 11, **dadurch gekennzeichnet, dass** das erste Kupplungsteil (1) aus Stahl oder aus Edelstahl als Gussteil gefertigt ist und die Ober- und/oder Begrenzungsflächen (4) oberflächengehärtet sind.

16. Spannvorrichtung nach Anspruch 11, 12 und/oder 13, **dadurch gekennzeichnet, dass** das erste Kupplungsteil (2) aus Stahl oder aus Edelstahl gefertigt ist und die Ober- und/oder Begrenzungsflächen (4) oberflächengehärtet sind und die Dicke des gehärteten Bereiches je nach Anwendung einstellbar ist.

17. Spannvorrichtung nach mindestens einem der vorherigen Ansprüche, **dadurch gekennzeichnet, dass** als Härtungsverfahren induktive, Laser oder andere Härtungsverfahren zum teilweise oder Oberflächen-Härten angewendet wird.

18. Spannvorrichtung nach mindestens einem der vorherigen Ansprüche, **dadurch gekennzeichnet, dass** die Verbindungsvorrichtung (6) mittels einer Verschraubung oder mechanisch, pneumatisch oder hydraulisch mittels eines Zugbolzens ausgebildet ist.

19. Spannvorrichtung nach mindestens einem der vorherigen Ansprüche, **dadurch gekennzeichnet, dass** das erste (1) und/oder zweite Kupplungsteil (2) eine Nut (18) mit mindestens zwei Kerben (19) zum Greifen mittels eines Roboters aufweist.

20. Spannvorrichtung nach mindestens einem der vorherigen Ansprüche, **dadurch gekennzeichnet, dass** das erste (1) und/oder zweite Kupplungsteil (2) eine bearbeitete Vorrichtung (20) zur Befestigung eines Werkzeugs oder Werkstücks (21) aufweist.

21. Spannvorrichtung nach mindestens einem der vorherigen Ansprüche, **dadurch gekennzeichnet, dass** das erste (1) und/oder zweite Kupplungsteil (2) einen Schaft (22) zur Befestigung einer Kupferelektrode (23) aufweist, wobei die Kupferelektrode (23) mittels einer inner- oder ausserhalb des Schaftes angeordneten Keilverzahnung (24) elektrisch leitend verbunden ist.

22. Spannvorrichtung nach mindestens einem der vorherigen Ansprüche, **dadurch gekennzeichnet, dass** das erste (1) und/oder zweite Kupplungsteil (2) im jeweils oberen nicht gehärteten Bereich (25) formgebend je nach Anwendung bearbeitbar ist, wobei die Oberfläche nach der formgebenden Bearbeitung gehärtet ist.

23. Spannvorrichtung nach mindestens einem der vorherigen Ansprüche, **dadurch gekennzeichnet, dass** das erste (1) und/oder zweite Kupplungsteil (2) eine bearbeitete Oberfläche zur genau positionierten Befestigung eines Spiegels oder eines anderen Instrumentes.

24. Spannvorrichtung nach mindestens einem der vorherigen Ansprüche, **dadurch gekennzeichnet, dass** das erste (1) und/oder zweite Kupplungsteil (2) im jeweils oberen ein speziell geformtes zur Kalibrierung für die Produktion weitere Muster angeordnet ist.

25. Verfahren zur Herstellung einer Spannvorrichtung nach mindestens einem der vorherigen Ansprüche, **dadurch gekennzeichnet, dass** das erste (1) und/oder zweite Kupplungsteil (2) zunächst ungehärtet nach bekannten Methoden anwendungsbezogen hergestellt, bearbeitet, geformt und die Oberfläche gehärtet wird.

26. Verfahren zur Herstellung einer Spannvorrichtung nach mindestens einem der vorherigen Ansprüche, **dadurch gekennzeichnet, dass** das erste (1) und/oder zweite Kupplungsteil (2) zunächst gehärtet und anschliessend bearbeitet wird.

27. Verfahren zur Herstellung einer Spannvorrichtung nach mindestens einem der vorherigen Ansprüche, **dadurch gekennzeichnet, dass** das erste (1) und/oder zweite Kupplungsteil (2) zunächst als Gussteil hergestellt, die Oberfläche gehärtet und anschliessend bearbeitet wird.

28. Verfahren zur Herstellung einer Spannvorrichtung nach mindestens einem der vorherigen Ansprüche, **dadurch gekennzeichnet, dass** das erste (1) und/oder zweite Kupplungsteil (2) zunächst als Gussteil hergestellt, bearbeitet und anschliessend die Oberfläche gehärtet wird.
